# EUROPEAN PATENT APPLICATION

(11) **EP 4 729 324 A2**
(43) Date of publication of application: **22.04.2026**
(21) Application number: 25209738.1
(22) Date of filing: 20.10.2025
(51) Int. Cl.: B60J 5/04

(54) **VEHICLE OUTER PLATE STRUCTURE**

(30) Priority: 21.10.2024 JP 2024185277; 30.01.2025 JP 2025014123
(71) Applicant: TOYOTA JIDOSHA KABUSHIKI KAISHA, Toyota-shi, Aichi-ken 471-8571 (JP)
(72) Inventor: SHIMIZU, Tatsuya, TOYOTA-SHI, AICHI-KEN, 471-8571 (JP); HYODO, Hiroki, TOYOTA-SHI, AICHI-KEN, 471-8571 (JP)
(74) Representative: Cabinet Beau de Loménie

(57) **Abstract**

A front door (100) includes a metal door frame (10) and a resin door outer panel (20) attached to a vehicle outer side of the door frame (10), and an outer peripheral portion (35) of the outer panel (20) is joined to the door frame (10).

## Description

### TECHNICAL FIELD

The present disclosure relates to a vehicle outer plate structure composed of a metal frame and a resin outer panel.

### BACKGROUND

JP 2015-9799 A discloses a vehicle member composed of an inner panel made of carbon fiber-reinforced plastic and an outer panel made of aluminum having a linear expansion coefficient greater than that of the carbon fiber-reinforced plastic. It also discloses provision of a thermal expansion absorption portion in the inner panel for absorbing a difference in thermal expansion between the inner panel and the outer panel.

### CITATION LIST

PATENT DOCUMENT 1: JP 2015-9799 A

### SUMMARY

In recent years, vehicle outer plate structures composed of metal frames and resin outer panels have been used. The amount of thermal expansion of the resin outer panel is greater than that of the metal frame, and panel ends of the outer panel thus extend outward due to thermal expansion. It is therefore necessary to increase gaps between the panel ends and adjacent components, which may degrade the vehicle appearance.

An object of the present disclosure is therefore to reduce outward extension of the panel ends of the outer panel due to thermal expansion in the vehicle outer plate structure composed of the metal frame and the resin outer panel.

A vehicle outer plate structure according to the present disclosure has a metal frame, and a resin outer panel attached to a vehicle outer side of the frame, and an outer peripheral portion of the outer panel is joined to the frame.

Because the outer peripheral portion of the outer panel is thus joined to the frame, it is possible to reduce outward extension of panel ends of the outer panel.

In the vehicle outer plate structure according to the present disclosure, the outer peripheral portion of the outer panel may include parts that are adjacent to members arranged next to the outer panel.

This makes it possible to provide smaller gaps between the outer panel and the members arranged next to the outer panel, thereby preventing deterioration in appearance.

In the vehicle outer plate structure according to the present disclosure, the outer panel may include an outer flat plate portion and edge plate portions rising from edge portions of the outer flat plate portion toward a vehicle inner side, and the outer peripheral portion may be a region including the edge portions of the outer flat plate portion and the edge plate portions.

This increases the rigidity of the outer peripheral portion attached to the frame and makes it possible to reduce deformation of the outer peripheral portion.

In the vehicle outer plate structure according to the present disclosure, the outer panel may include plate flanges rising from the edge plate portions toward an inner peripheral portion of the outer panel, and the outer peripheral portion may be the region further including the plate flanges. The plate flanges may be joined to the frame.

Providing the plate flanges in this manner increases the rigidity of the outer peripheral portion attached to the frame and thus makes it possible to reduce deformation of the outer peripheral portion.

In the vehicle outer plate structure according to the present disclosure, the outer panel may include a bracket located at a corner between the edge plate portion and the outer flat plate portion. The outer panel may be the region further including the bracket, and the bracket may be joined to the frame.

Providing the bracket in this manner increases the rigidity of the outer peripheral portion attached to the frame and thus makes it possible to reduce deformation of the outer peripheral portion.

In the vehicle outer plate structure according to the present disclosure, the bracket may be connected to the outer flat plate portion and the edge plate portion, to thereby form a closed cross sectional shape together with the outer flat plate portion and the edge plate portion.

The bracket forming the closed cross sectional shape increases the rigidity of the outer peripheral portion attached to the frame and thus makes it possible to reduce deformation of the outer peripheral portion.

In the vehicle outer plate structure according to the present disclosure, the outer panel may have an elongated protruding portion that protrudes toward the vehicle outer side, and a part of the outer peripheral portion at which a ridge of the elongated protruding portion is located may be joined to the frame.

This makes it possible to effectively reduce outward extension, from panel ends, of the elongated protruding portion having high surface rigidity.

In the vehicle outer plate structure according to the present disclosure, a joint position at which the outer panel and the frame are joined together may be located within 20 mm from the panel end of the outer panel.

By reducing the distance from the joint position to the panel end in this manner, it is possible to reduce the amount of thermal expansion between the joint position and the panel end when the outside temperature rises.

In the vehicle outer plate structure according to the present disclosure, a vehicle inner-side surface of a general portion of the outer panel other than the outer peripheral portion may be supported by the frame such that the general portion is movable in the plate thickness direction.

This allows the general portion to move in the plate thickness direction to absorb thermal expansion of the outer panel.

In the vehicle outer plate structure according to the present disclosure, the frame may include an inner panel including an inner flat plate portion and rising portions rising from edges of the inner flat plate portion toward the vehicle outer side, and at least one longitudinal member that connects between a pair of the rising portions opposite to each other. The outer peripheral portion of the outer panel may be joined to the rising portions, and the vehicle inner-side surface of the general portion may be supported by the longitudinal member.

This allows the outer panel to move toward the vehicle outer side when the outer panel thermally expands. It also makes it possible to prevent the outer panel from rattling.

In the vehicle outer plate structure according to the present disclosure, the vehicle inner-side surface of the general portion may be joined to the longitudinal member via an elastic member.

This allows the outer panel to move in the plate thickness direction to absorb thermal expansion. It also makes it possible to prevent the outer panel from rattling.

In the vehicle outer plate structure according to the present disclosure, the frame and the outer panel may constitute an opening and closing member that opens and closes an opening in a body and may include a side door, a back door, or a hood.

This makes it possible to provide a smaller gap between the opening in the body and the side door, the back door, or the hood, thereby preventing deterioration in appearance.

In the vehicle outer plate structure according to the present disclosure, the opening and closing member may be the side door, and a door handle may be located at a rear part of the outer panel. A part of the outer panel that is located on the rear side of the door handle and a part of the outer panel that is located in the vicinity of a belt line above the door handle may be joined to the frame.

This makes it possible to reduce rearward extension of a rear end of the side door due to thermal expansion and provide a smaller gap between the side door and the member located next to the side door on the rear side, thereby preventing deterioration in appearance. It also makes it possible to reduce deformation of the part located in the vicinity of the belt line due to thermal expansion, thereby preventing deterioration in appearance.

In the vehicle outer plate structure according to the present disclosure, the frame may be a body of a vehicle. The outer panel may be a design panel that is attached to the vehicle outer side of the body and constitutes a design surface of the body.

This makes it possible to reduce extension of panel ends of the design panel toward the members arranged next to the design panel and provide smaller gaps between the design panel and the members, thereby preventing deterioration in appearance.

The present disclosure can reduce outward extension of the panel ends of the outer panel due to thermal expansion in the vehicle outer plate structure composed of the metal frame and the resin outer panel.

### BRIEF DESCRIPTION OF DRAWINGS

Embodiments of the present disclosure will be described based on the following figures, wherein:
FIG. 1 is a side view of a vehicle with a front door according to an embodiment;
FIG. 2 is a perspective view of the front door according to the embodiment;
FIG. 3 is an elevational view of the front door shown in FIG. 2 as seen from the inside of the vehicle;
FIG. 4 is a cross-sectional view of the front door shown in FIG. 2, taken along A-A in FIG. 3;
FIG. 5 is a cross-sectional view of the front door shown in FIG. 2, taken along B-B in FIG. 3;
FIG. 6 is a detailed view of Part C shown in FIG. 4;
FIG. 7 is a detailed view of Part D shown in FIG. 5;
FIG. 8 is a detailed view of Part E shown in FIG. 5;
FIG. 9 is a cross-sectional view showing a joint at a front part of the front door according to another embodiment;
FIG. 10 is a cross-sectional view showing a joint at the front part of the front door according to another embodiment;
FIG. 11 is a cross-sectional view showing a joint at the front part of the front door according to another embodiment; and
FIG. 12 is a cross-sectional view showing a joint at the front part of the front door according to another embodiment.

### DESCRIPTION OF EMBODIMENTS

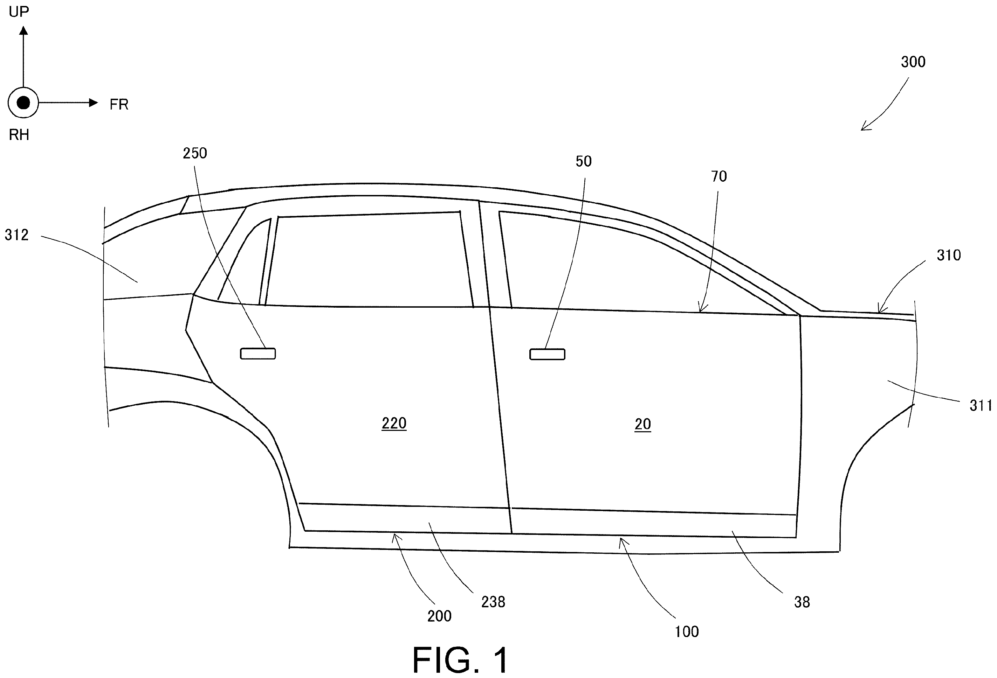

Vehicle outer plate structures according to embodiments will now be described with reference to the drawings. First, a vehicle 300 having a vehicle outer plate structure according to the embodiments will be described with reference to FIG. 1. In the drawings, arrows "FR", "UP", and "RH" respectively represent the front side, the upper side, and the right side of the vehicle 300. In addition, the directions opposite to the arrows "FR", "UP", and "RH" respectively represent the rear side, the lower side, and the left side of the vehicle. Hereinafter, when the description is given simply using front and rear, right and left, and up and down directions, unless otherwise specified, they respectively indicate front and rear in the front-and-rear direction, right and left in the right-and-left direction, and up and down in the up-and-down direction of the vehicle 300.

The vehicle 300 includes a body 310, front door 100, and rear door 200. The body 310 is composed of a metal body frame (not shown) and body outer panels, such as a plastic fender panel 311 and a plastic quarter panel 312, attached to the outer side of the metal body frame. The front door 100 and the rear door 200 are side doors. Front ends of the side doors are rotatably attached to the body frame with hinges, while rear ends of the side doors open and close toward the side of the vehicle 300. The front door 100, the rear door 200, the body frame and the fender panel 311, and the body frame and the quarter panel 312 are examples of the vehicle outer plate structure. The front door 100 will now be described.

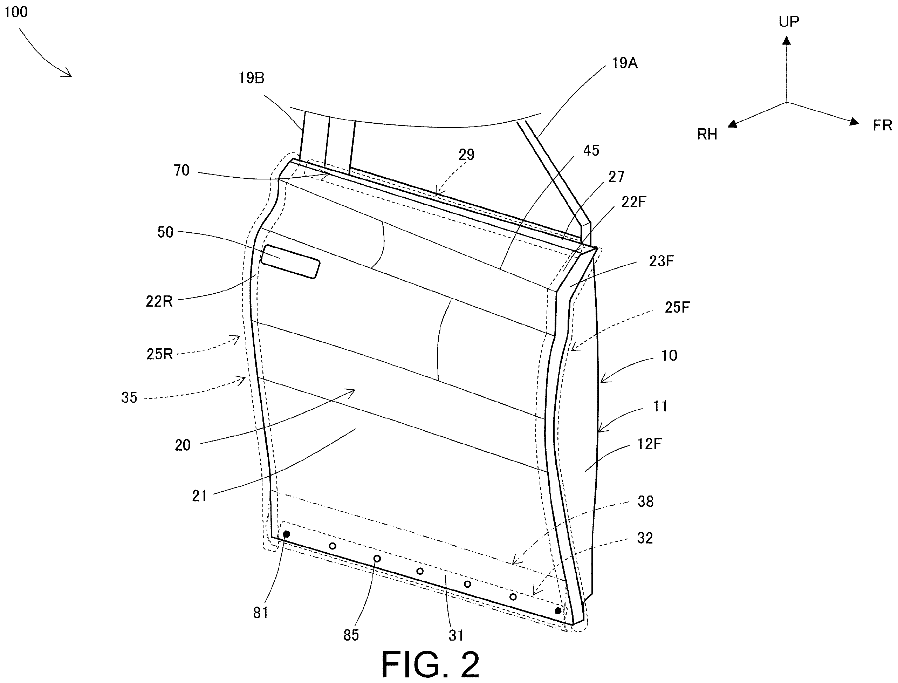

As shown in FIG. 2, the front door 100 includes a metal door frame 10, a resin door outer panel 20 attached to the outer side of the door frame 10, and a lower garnish 38.

As shown in FIGs. 2 to 5, the door frame 10 includes a door inner panel 11, window frames 19A and 19B, an outer reinforcement 16, a dent reinforcement 17, and an impact beam 18. The door inner panel 11, the window frames 19A and 19B, the outer reinforcement 16, the dent reinforcement 17, and the impact beam 18 are all made of metal.

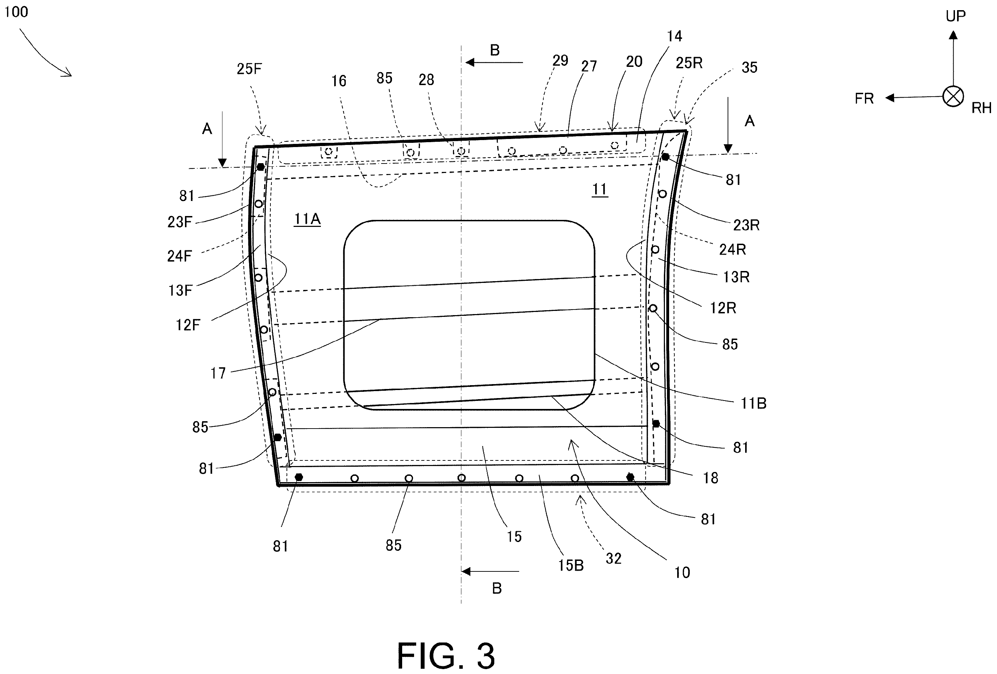

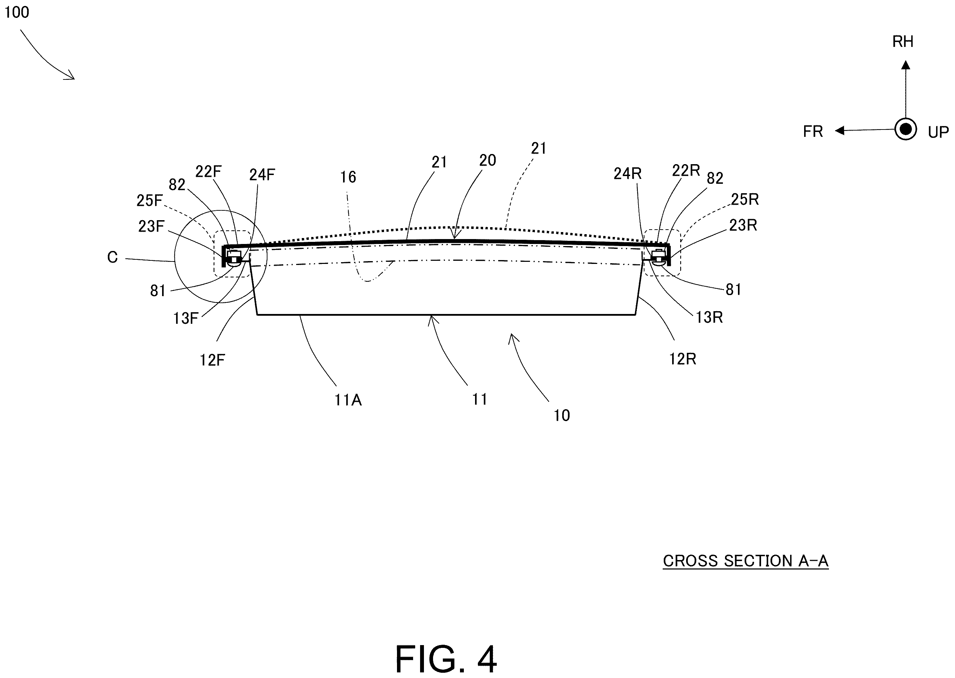

As shown in FIGs. 3 to 5, the door inner panel 11 includes an inner flat plate portion 11A, a front rising portion 12F, a rear rising portion 12R, a front flange 13F, a rear flange 13R, an upper rising portion 14, a lower rising portion 15, and a lower flange 15B. As shown in FIG. 3, the inner flat plate portion 11A is a metal flat plate portion provided with a rectangular opening 11B in the center. As shown in FIGs. 3 and 4, the front rising portion 12F is a plate-like portion that rises from a front edge of the inner flat plate portion 11A toward the vehicle outer side (to the right). The front flange 13F is a plate-like portion that extends forward from the vehicle outer side end (right end) of the front rising portion 12F. Similarly, the rear rising portion 12R is a plate-like portion that rises from a rear edge of the inner flat plate portion 11A toward the vehicle outer side (to the right), and the rear flange 13R is a plate-like portion that extends rearward from the vehicle outer side end (right end) of the rear rising portion 12R.

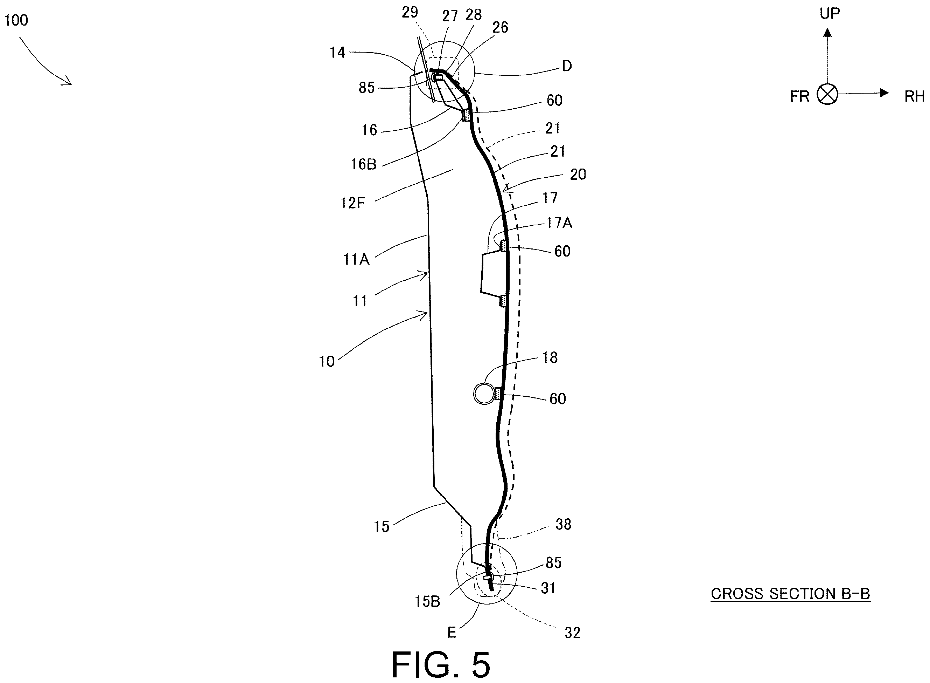

As shown in FIGs. 3 and 5, the upper rising portion 14 is a plate-like portion that rises from an upper edge of the inner flat plate portion 11A toward the vehicle outer side (to the right), and the lower rising portion 15 is a folded plate-like portion that rises in a step-like manner from a lower portion of the inner flat plate portion 11A toward the vehicle outer side (to the right). The lower flange 15B is a plate-like portion that extends downward from a lower end of the lower rising portion 15.

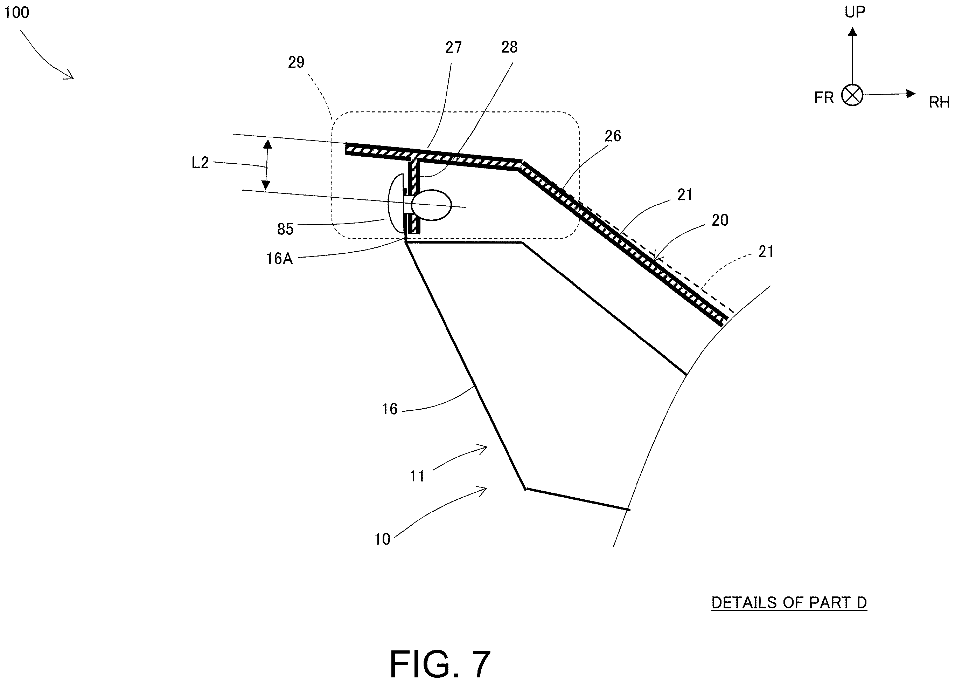

As shown in FIGs. 3 to 5, the outer reinforcement 16 is a longitudinal member that connects, along the front-and-rear direction, upper portions of the front rising portion 12F and the rear rising portion 12R that are opposite to each other along the front-and-rear direction. The outer reinforcement 16 has a closed cross-section structure and includes an upper arm 16A (see FIG. 7) that extends upward and a lower arm 16B that extends downward. The dent reinforcement 17 is a longitudinal member that connects, along the front-and-rear direction, a center portion of the front rising portion 12F in the up-and-down direction with a center portion of the rear rising portion 12R in the up-and-down direction. The dent reinforcement 17 has a hat-shaped cross-section with its vehicle outer side (right side) open. The impact beam 18 is a longitudinal member that connects, along the front-and-rear direction, the front rising portion 12F and the rear rising portion 12R below the dent reinforcement 17. The impact beam 18 has a cylindrical cross-section.

As explained below, the door outer panel 20 is joined to the front flange 13F, the rear flange 13R, and the lower flange 15B of the door inner panel 11, and the upper arm 16A of the outer reinforcements 16 using bolts 81 or clips 85. To this end, the front flange 13F, the rear flange 13R, and the lower flange 15B of the door inner panel 11 and the upper arm 16A of the outer reinforcement 16 are provided with bolt holes through which the bolts 81 or the clips 85 are mounted. The bolt holes have the diameter approximately the same as the outer diameter of the bolts 81 and the clips 85 so that movement of the door outer panel 20 in the in-plane direction can be limited.

As shown in FIGs. 2 to 5, the door outer panel 20 includes an outer flat plate portion 21, a front edge plate portion 23F, a rear edge plate portion 23R, a front plate flange 24F, a rear plate flange 24R, an upper edge plate portion 27, an upper plate flange 28, and a lower plate flange 31. In FIGs. 4 to 8, the broken lines indicate the outer flat plate portion 21 after deformation due to thermal expansion.

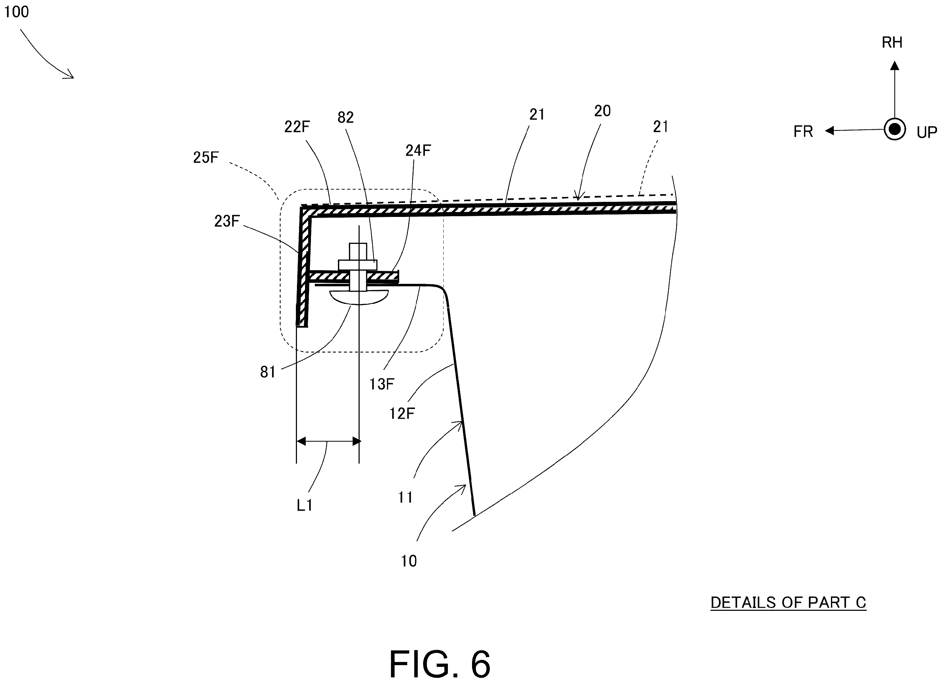

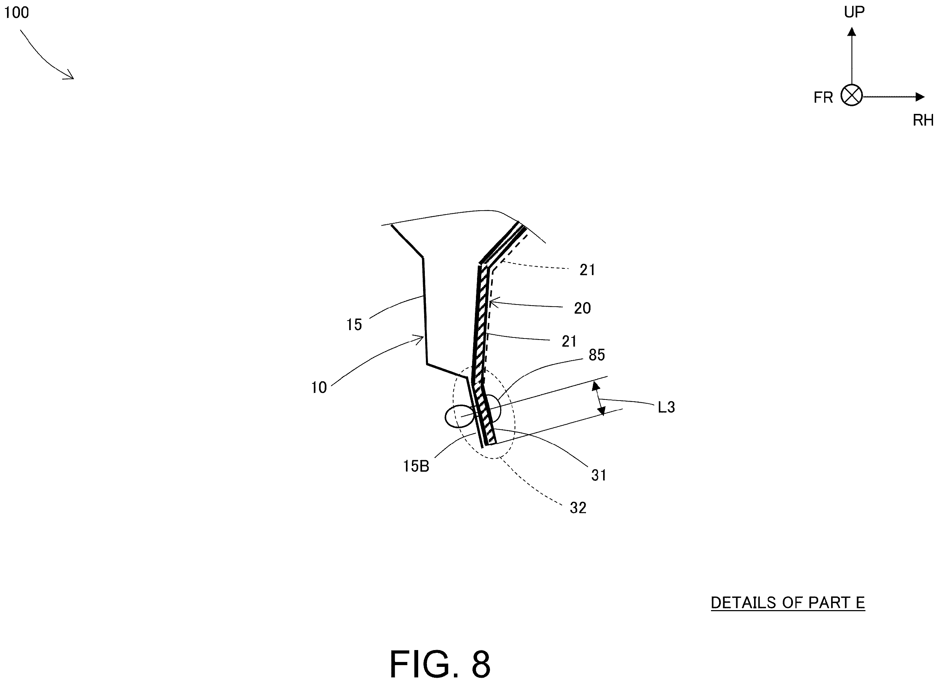

The outer flat plate portion 21 is a plate-like portion with a surface, on the vehicle outer side, constituting a design surface of the front door 100. The outer flat plate portion 21 includes the front edge portion 22F (see FIG. 6), the rear edge portion 22R, and an upper edge portion 26. The front edge plate portion 23F is a plate-like portion that protrudes from a front edge of the outer flat plate portion 21 toward the vehicle inner side (left side). The front plate flange 24F is a plate-like portion rising rearward from the front edge plate portion 23F in the direction toward an inner peripheral portion of the door outer panel 20. Similarly, the rear edge plate portion 23R is a plate-like portion that protrudes from the rear edge of the outer flat plate portion 21 toward the vehicle inner side (left side), and the rear plate flange 24R is a plate-like portion that rises forward from the rear edge plate portion 23R. Similarly, as shown in FIG. 7, the upper edge plate portion 27 is a plate-like portion that protrudes from the upper edge of the outer flat plate portion 21 toward the vehicle inner side (left side), and the upper plate flange 28 is a plate-shaped portion that extends downward from the upper edge plate portion 27. As shown in FIG. 8, the lower plate flange 31 is a plate-like portion that extends downward at the lower end of the outer flat plate portion 21.

Here, the front edge plate portion 23F, the rear edge plate portion 23R, the front plate flange 24F, the rear plate flange 24R, the upper edge plate portion 27, and the upper plate flange 28 are integrally molded from resin together with the outer flat plate portion 21.

As shown in FIGs. 3 and 4, upper and lower ends at a front part of the door outer panel 20 are joined to the door frame 10 by fastening the front plate flange 24F to the front flange 13F of the door inner panel 11 using the bolts 81 and nuts 82. A middle portion between the upper and lower ends at the front part of the door outer panel 20 is also joined to the door frame 10 by fastening the front plate flange 24F to the front flange 13F of the door inner panel 11 using the clips 85. Similarly, the upper and lower ends at the rear part of the door outer panel 20 are joined to the door frame 10 by fastening the rear plate flange 24R to the rear flange 13R using the bolts 81 and the nuts 82. The middle portion of the door outer panel 20 is also joined to the door frame 10 by fastening the rear plate flange 24R to the rear flange 13R using the clips 85. The positions of the bolts 81 and the clips 85 are thus joint positions at which the front plate flange 24F and the rear plate flange 24R are joined to the front flange 13F and the rear flange 13R, respectively.

Similar to the front flange 13F and the rear flange 13R, the front plate flange 24F and the rear plate flange 24R are provided with bolt holes through which the bolts 81 and the clips 85 are mounted. Similar to the bolt holes in the front flange 13F and the rear flange 13R, these bolt holes have the diameter approximately the same as the outer diameter of the bolts 81 and the clips 85 so that movement of the door outer panel 20 in the in-plane direction can be limited.

The pitch between the bolt 81 and the clip 85 in the up-and-down direction and the pitch between the clips 85 in the up-and-down direction are approximately 100 mm to 150 mm. As shown in FIG. 6, the length between the center of the bolt 81 or the clip 85 and the front panel end of the door outer panel 20 is L1. As described above, the positions of the bolts 81 and the clips 85 are the joint positions at which the front plate flange 24F and the rear plate flange 24R are respectively joined to the front flange 13F and the rear flange 13R, and thus, the length L1 is the length between the panel end and the joint positions. For the front door 100, L1 is set to be less than 20 mm. Furthermore, the length between the center of the bolt 81 or the clip 85 and the rear panel end of the door outer panel 20 may be L1, or may differ from L1 as long as it is less than 20 mm.

As shown in FIGs. 2 to 4 and FIG. 6, a region including the front edge portion 22F, the front edge plate portion 23F, and the front plate flange 24F of the door outer panel 20 constitute a front outer peripheral portion 25F. Similarly, as shown in FIGs. 2 to 4, a region including the rear edge portion 22R, the rear edge plate portion 23R, and the rear plate flange 24R of the door outer panel 20 constitute a rear outer peripheral portion 25R. As shown in FIG. 2, the rear outer peripheral portion 25R is located on the vehicle rear side of a door handle 50.

As shown in FIGs. 3, 5, and 7, an upper portion of the door outer panel 20 is joined to the door frame 10 by fastening the upper plate flange 28 to the upper arm 16A (see FIG. 7) of the outer reinforcement 16 using the clips 85. The upper plate flange 28 is provided with bolt holes through which the clips 85 are mounted. Similar to the bolt holes in the upper arm 16A, these bolt holes have a diameter approximately the same as the outer diameter of the clips 85.

The pitch between the clips 85 in the front-and-rear direction is approximately 100 mm to 150 mm. As shown in FIG. 7, the length between the center of the clip 85 and an upper panel end of the door outer panel 20 is L2. For the front door 100, L2 is set to be less than 20 mm, similar to L1. As shown in FIGs. 2, 3, 5, and 7, a region including the upper edge portion 26, the upper edge plate portion 27, and the upper plate flange 28 of the door outer panel 20 constitutes an upper outer peripheral portion 29. As shown in FIG. 2, the upper outer peripheral portion 29 is located in the vicinity of the belt line 70 (see FIG. 1) above the door handle 50.

As shown in FIGs. 3, 5, and 8, the front and rear portions at the lower part of the door outer panel 20 are joined to the door frame 10 by fastening the lower plate flange 31 to the lower flange 15B of the door inner panel 11 using the bolts 81 and the nuts 82. The middle portion between the front portion and the rear portion at the lower part of the door outer panel 20 is also joined to the door frame 10 by fastening the lower plate flange 31 to the lower flange 15B of the door inner panel 11 using the clips 85. The lower plate flange 31 is provided with bolt holes through which the bolts 81 or the clips 85 are mounted. These bolt holes have a diameter approximately the same as the outer diameter of the bolts 81 or the clips 85.

The pitch between the bolt 81 and the clip 85 in the front-and-rear direction and the pitch between the clips 85 in the front-and-rear direction are approximately 100 mm to 150 mm. As shown in FIG. 8, the length between the center of the clip 85 and a lower panel end of the door outer panel 20 is L3. For the front door 100, L3 is set to be less than 20 mm, similar to L1 and L2. As shown in FIGs. 3, 5, and 8, a region including the lower plate flange 31 of the door outer panel 20 constitutes a lower outer peripheral portion 32.

As shown in FIG. 5, the lower garnish 38 is a U-shaped resin member that covers the lower end of the door outer panel 20 and the lower end of the door inner panel 11. The bolts 81 and the clips 85 arranged in the lower outer peripheral portion 32 are covered with the lower garnish 38.

As shown in FIGs. 2 and 3, the front peripheral portion 25F, the rear peripheral portion 25R, the upper peripheral portion 29, and the lower peripheral portion 32 of the door outer panel 20 constitute the peripheral portion 35 of the door outer panel 20. Therefore, the outer peripheral portion 35 of the door outer panel 20 is joined to the door frame 10 using the bolts 81 and the nuts 82 or the clips 85.

Here, as shown in FIGs. 1 and 2, the front outer peripheral portion 25F is a part that is adjacent to a rear end of the fender panel 311 which is located next to the door outer panel 20 on the front side of the door outer panel 20. In addition, the rear peripheral portion 25R is a part that is adjacent to a front end of a door outer panel 220 of the rear door 200 located on the rear side of the door outer panel 20.

On the other hand, as shown in FIG. 5, a general portion of the door outer panel 20 other than the peripheral portion 35 is supported such that a vehicle inner-side surface of the door outer panel 20 is movable in the plate thickness direction by the lower arm 16B of the outer reinforcement 16, an arm portion 17A of the dent reinforcement 17, and the impact beam 18. More specifically, the vehicle inner-side surface of the general portion is connected to the lower arm 16B, the arm portion 17A, and the impact beam 18 via elastic members 60. The elastic members 60 may be made of any material that can stretch and contract to allow the general portion to move in the plate thickness direction. The elastic members 60 may be made of a material such as, for example, mastic adhesives.

Deformation of the portions of the front door 100 will now be described. As resin has a higher thermal expansion coefficient than metal, the amount of thermal expansion of the resin door outer panel 20 when the outside air temperature rises is greater than that of the metal door frame 10. As described above, the outer peripheral portion 35 of the door outer panel 20 is joined to the door frame 10 using the bolts 81 and the nuts 82, or the clips 85. The bolt holes formed in the door frame 10, through which the bolts 85 or the clips 85 are mounted, have approximately the same diameter as the outer diameter of the bolts 81 or the clips 85. Therefore, movement of the outer peripheral portion 35 of the door outer panel 20 in the in-plane direction is limited.

On the other hand, the general portion other than the outer peripheral portion 35 is joined to the lower arm 16B of the outer reinforcement 16, the arm portion 17A of the dent reinforcement 17, and the impact beam 18 via the elastic member 60 such that the vehicle inner-side surface is movable in the plate thickness direction. Therefore, when the outside air temperature rises, the door outer panel 20 deforms such that the outer flat plate portion 21 expands toward the vehicle outer side, as shown by the broken lines in FIGs. 3 to 8. At this time, the elastic member 60 extends in the plate thickness direction as the outer flat plate portion 21 deforms. The thermal expansion difference between the metal door frame 10 and the door outer panel 20 is then absorbed by the deformation of the outer flat plate portion 21 toward the vehicle outer side. When the outside air temperature decreases, the general portion of the outer flat plate portion 21 deforms toward the vehicle inner side and returns to its original shape, and the elastic member 60 contracts in the plate thickness direction and returns to its initial state.
The general portion of the door outer panel 20 is also joined to the lower arm 16B of the outer reinforcement 16, the arm portion 17A of the dent reinforcement 17, and the impact beam 18 via the elastic member 60. It is thus possible to prevent the door outer panel 20 from rattling in the plate thickness direction.

In addition, the door outer panel 20 is fastened to the door frame 10 at the positions where the length L1 between the center of the bolt 81 or the clip 85 and the front panel end of the door outer panel 20 is less than 20 mm. The amount of movement of the front panel end toward the fender panel 311 is therefore almost zero. This makes it possible to provide a smaller gap between the front panel end and the fender panel 311, thereby preventing deterioration in appearance. Similarly, the amount of movement of the rear panel end toward the door outer panel 220 of the rear door 200 is almost zero. As such, it is possible to provide a smaller gap between the rear panel end of the door outer panel 20 and the door outer panel 220 of the rear door 200, thereby improving the appearance. Similarly, the amount of upward movement of the upper panel end is almost zero. It is thus possible to reduce deformation in the vicinity of the belt line 70, thereby improving the appearance.

The front outer peripheral portion 25F of the door outer panel 20 includes the front edge plate portion 23F and the front plate flange 24F provided on the front edge plate portion 23F, and the front plate flange 24F is joined to the door frame 10 using the bolts 81 or the clips 85. This makes it possible to increase the rigidity of the joint between the door outer panel 20 and the door frame 10, thereby suppressing the reaction force due to thermal expansion of the door outer panel 20. The rear outer peripheral portion 25R and the upper outer peripheral portion 29 also have a structure similar to that of the front outer peripheral portion 25F and make it possible to suppress the reaction force due to thermal expansion of the door outer panel 20. As a result, the outer flat plate portion 21 of the door outer panel 20 is allowed to thermally deform toward the vehicle outer side.

In addition, because the pitch between the bolt 81 and the clip 85 and the pitch between the clips 85 are set to approximately 100 mm to 150 mm, when the outside temperature rises, it is possible to prevent the outer peripheral portion 35 of the door outer panel 20 from being lifted from the door frame 10, thereby preventing deterioration in appearance.

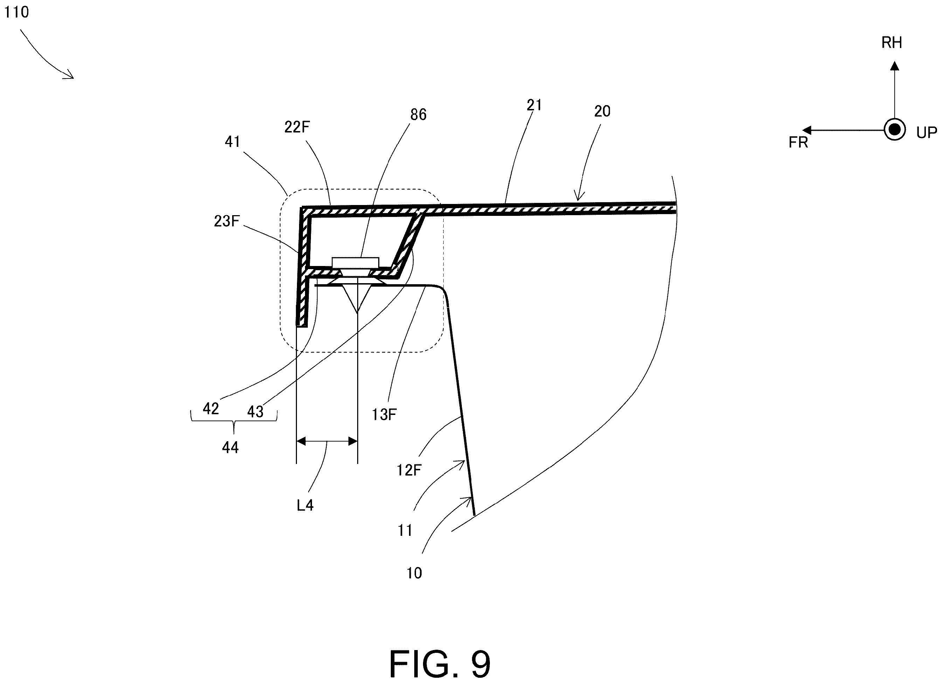

Next, structures of front doors 110, 120, 130, and 140 will be described with reference to FIGs. 9 to 12. The portions that are similar to those included in the above description with reference to FIGs. 1 to 8 are assigned the same reference signs, and their description will be omitted.

The front door 110 shown in FIG. 9 is similar to the front door 100 described with reference to FIG. 6, except that the front plate flange 24F is replaced with a bracket 44 composed of a horizontal rib 42 and a vertical rib 43. The horizontal rib 42 is provided with holes through which clips 86 are mounted. The door outer panel 20 is fastened to the door frame 10 by fastening the horizontal rib 42 to the front flange 13F with the clips 86. The length L4 between the front panel end of the door outer panel 20 and the center of the clip 86 is less than 20 mm, as described above for lengths L1 to L3.

For the front door 110, the bracket 44 forms a closed cross-sectional structure, together with the front edge portion 22F and the front edge plate portion 23F of the outer flat plate portion 21. This makes it possible to increase the rigidity of a front outer peripheral portion 41, thereby suppressing the reaction force due to thermal expansion of the door outer panel 20. As a result, the outer flat plate portion 21 of the door outer panel 20 is allowed to thermally deform toward the vehicle outer side.

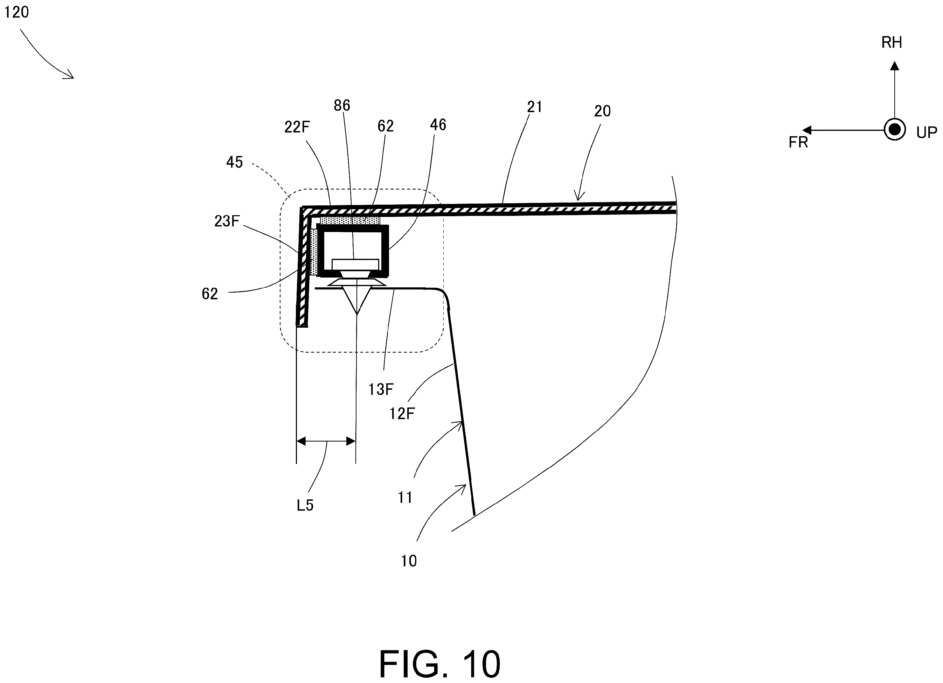

In the front door 120 shown in FIG. 10, a separate bracket 46 having a rectangular closed cross-sectional shape is fixed to a corner between the front edge portion 22F and the front edge plate portion 23F of the outer flat plate portion 21 using an adhesive 62. The bracket 46 is provided with holes through which the clips 86 are mounted. The door outer panel 20 is fastened to the door frame 10 by fastening the bracket 46 to the front flange 13F using the clips 86. The length L5 between the front panel end of the door outer panel 20 and the center of the clip 85 is less than 20 mm, as described above for lengths L1 to L4.

Similar to the front door 110, the front door 120 has increased rigidity of the front outer peripheral portion 41 and thus can suppress the reaction force due to thermal expansion of the door outer panel 20. As a result, the outer flat plate portion 21 is allowed to thermally deform toward the vehicle outer side.

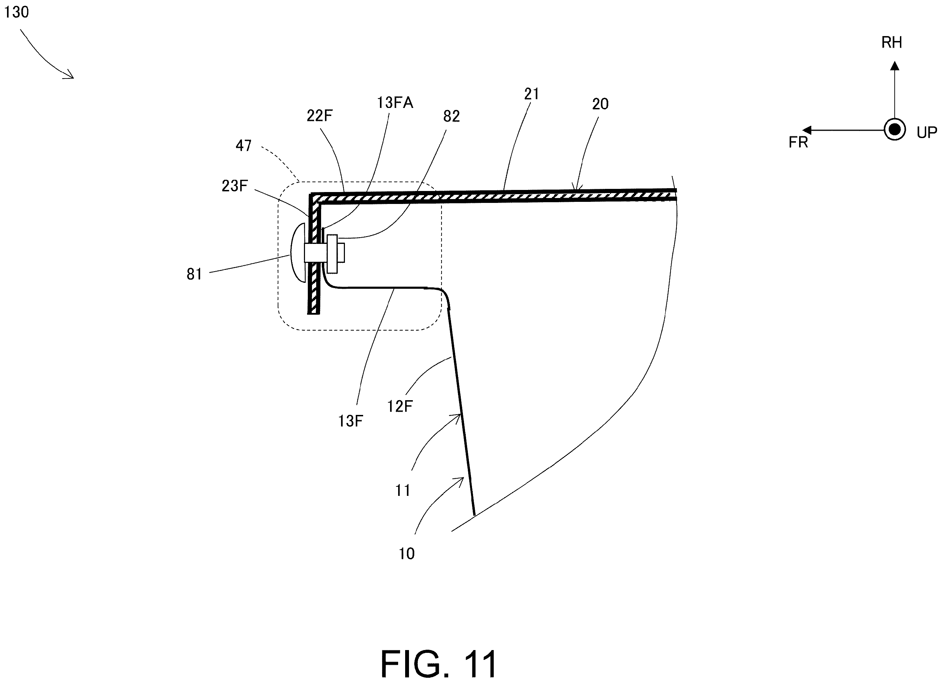

For the front door 130 shown in FIG. 11, the door inner panel 11 has a rising flange 13FA extending from the front end of the front flange 13F toward the vehicle outer side. The front edge plate portion 23F of the door outer panel 20 is fastened to the rising flange 13FA with the bolts 81 and the nuts 82.

For the front door 130, the length between the front panel end of the door outer panel 20 and the joint position is zero, and thus the amount of movement of the front panel end toward the fender panel 311 can be reduced to zero. This makes it possible to provide a smaller gap between the front panel end and the fender panel 311 and improve the appearance.

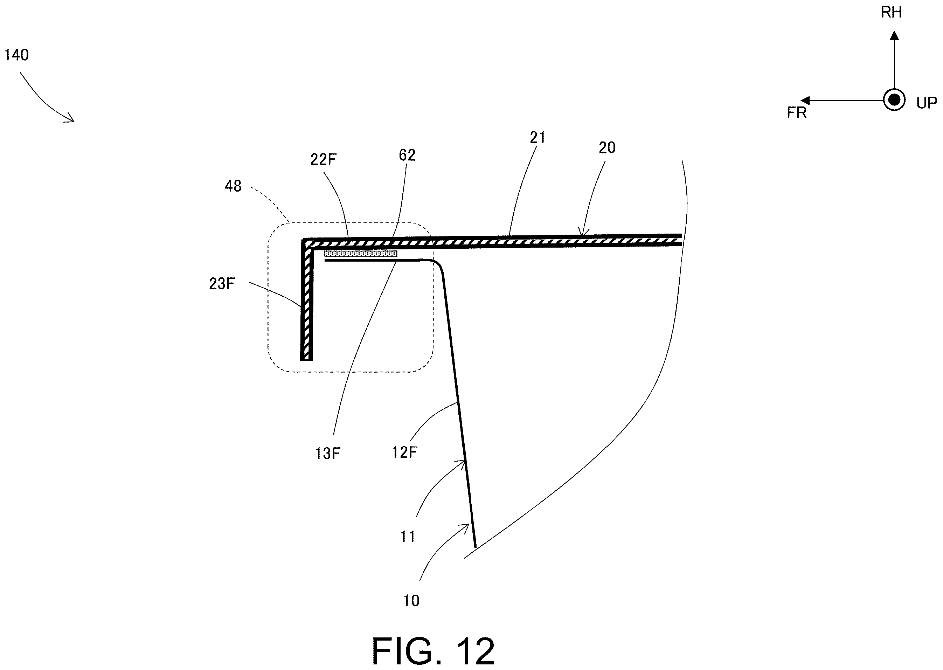

For the front door 140 shown in FIG. 12, the vehicle inner-side surface of the front edge portion 22F of the door outer panel 20 is joined to the front flange 13F of the door frame 10 with the adhesive 62. This simple structure makes it possible to reduce outward extension of the panel end of the door outer panel 20 due to thermal expansion and allow the outer flat plate portion 21 to deform toward the vehicle outer side to absorb thermal expansion.

Furthermore, as shown in FIG. 2, when the door outer panel 20 has the elongated protruding portion 45 extending so as to protrude toward the vehicle outer side along the front-and-rear direction, in the front peripheral portion 25F and the rear peripheral portion 25R, the bolts 81 or the clips 85 may be arranged at positions where the ridge of the elongated protruding portion 45 is located. This makes it possible to reduce forward or rearward extension of the elongated protruding portion 45, which has high surface rigidity, from the front panel end or the rear panel end when the outside air temperature rises.

Although the front door 100 of the vehicle 300 has been described as an example of the vehicle outer plate structure, the rear door 200 is similar to the front door 100 and includes the metal door frame (not shown), the resin door outer panel 220, and a lower garnish 238. An outer peripheral portion of the door outer panel 220 is joined to the door frame, and a vehicle inner-side surface of a general portion of the door outer panel 220 is supported by the door frame so as to be movable in the plate thickness direction. The rear door 200 also has a door handle 250 at a rear part of the door outer panel 220. Similar to the front door 100, the outer peripheral portion of the rear door 200 does not move in the in-plane direction, and the general portion of the door outer panel 220 deforms toward the vehicle outer side to absorb thermal expansion. As the outer peripheral portion of the rear door 200 does not move in the in-plane direction, a gap between the rear door 200 and the door outer panel 20 of the front door 100 and/or the quarter panel 312 that are arranged next to the rear door 200 can be made smaller, thereby improving the appearance.

In the vehicle 300, an opening and closing member for opening and closing an opening in the body 310, such as a back door (not shown) and a hood (not shown), may have a structure similar to that of the front door 100.

In addition, for example, the resin fender panel 311 and the resin quarter panel 312, which are design panels of the body 310, may be attached to the body frame in an arrangement similar to that of the front door 100. For example, an outer peripheral portion of the fender panel 311 may be joined to the body frame, and a vehicle inner-side surface of a general portion of the fender panel 311 may be supported by the body frame so as to be movable in the plate thickness direction. This allows the fender panel 311 to deform toward the vehicle outer side when the outside temperature rises, to thereby prevent its panel end from moving toward the door outer panel 20 of the front door 100. It is thus possible to provide the smaller gap between the fender panel 311 and the door outer panel 20 and improve the appearance. The same applies to the quarter panel 312.

Although it has been described that, by setting the diameter of the bolt holes in the door outer panel 20 and the door frame 10 to be approximately the same as the diameter of the bolts 81 and the clips 85, the movement of the door outer panel 20 in the in-plane direction is limited, this arrangement is not limiting. For example, in addition to the above arrangement, pins may be provided on the door frame 10, and pin holes through which the pins are mounted may be provided in the outer peripheral portion 35 of the door outer panel 20. By setting the diameter of the pin holes to be approximately the same as the diameter of the pins, the movement of the door outer panel 20 in the in-plane direction may be limited.

## Claims

1. A vehicle outer plate structure (100) comprising:
a metal frame (10); and
a resin outer panel (20) attached to a vehicle outer side of the frame (10), wherein
an outer peripheral portion (35) of the outer panel (20) is joined to the frame (10).

2. The vehicle outer plate structure according to Claim 1, wherein the outer peripheral portion (35) of the outer panel (20) includes parts that are configured to be adjacent to members (220, 311) arranged next to the outer panel (20).

3. The vehicle outer plate structure according to Claim 1, wherein
the outer panel (20) comprises an outer flat plate portion (21) and edge plate portions (23F, 23R, 27) rising from edge portions (22F, 22R, 26) of the outer flat plate portion (21) toward a vehicle inner side, and
the outer peripheral portion (35, 25F, 25R, 29) is a region including the edge portions (22F, 22R, 26) of the outer flat plate portion (21) and the edge plate portions (23F, 23R, 27).

4. The vehicle outer plate structure according to Claim 3, wherein
the outer panel (20) includes plate flanges (24F, 24R, 28) rising from the edge plate portions (23F, 23R, 27) toward an inner peripheral portion of the outer panel (20),
the outer peripheral portion (35, 25F, 25R, 29) is the region further including the plate flanges (24F, 24R, 28), and
the plate flanges (24F, 24R, 28) are joined to the frame (10).

5. The vehicle outer plate structure according to Claim 3, wherein
the outer panel (20) includes a bracket (44, 46) located at a corner between the edge plate portion (23F, 23R) and the outer flat plate portion (21),
the outer peripheral portion (35) is the region further including the bracket (44, 46), and
the bracket (44, 46) is joined to the frame (10).

6. The vehicle outer plate structure according to Claim 5, wherein the bracket (44, 46) is connected to the outer flat plate portion (21) and the edge plate portion (23F, 23R), to thereby form a closed cross sectional shape together with the outer flat plate portion (21) and the edge plate portion (23F, 23R).

7. The vehicle outer plate structure according to any one of Claims 1 to 6, wherein
the outer panel (20) has an elongated protruding portion (45) that protrudes toward the vehicle outer side, and
a part of the outer peripheral portion (35) at which a ridge of the elongated protruding portion (45) is located is joined to the frame (10).

8. The vehicle outer plate structure according to any one of Claims 1 to 6, wherein a joint position at which the outer panel (20) and the frame (10) are joined together is located within 20 mm from a panel end of the outer panel (20).

9. The vehicle outer plate structure according to any one of Claims 1 to 6, wherein a vehicle inner-side surface of a general portion of the outer panel (20) other than the outer peripheral portion is supported by the frame (10) such that the general portion is movable in the plate thickness direction.

10. The vehicle outer plate structure according to Claim 9, wherein the frame (10) includes
an inner panel (11) including an inner flat plate portion (11A) and rising portions (12F, 12R) rising from edges of the inner flat plate portion (11A) toward the vehicle outer side, and
at least one longitudinal member (17, 18) that connects between a pair of the rising portions (12F, 12R) opposite to each other, wherein
the outer peripheral portion (35, 25F, 25R) of the outer panel (20) is joined to the rising portions (12F, 12R), and
the vehicle inner-side surface of the general portion is supported by the longitudinal member (17, 18).

11. The vehicle outer plate structure according to Claim 10, wherein the vehicle inner-side surface of the general portion is joined to the longitudinal member (17, 18) via an elastic member (60).

12. The vehicle outer plate structure according to any one of Claims 1 to 6, wherein
the frame (10) and the outer panel (20) constitute an opening and closing member configured to open and close an opening in a body (310), and
the opening and closing member includes a side door (100, 200), a back door, or a hood.

13. The vehicle outer plate structure according to Claim 12, wherein
the opening and closing member is a side door (100, 200),
a door handle (50) is located at a rear part of the outer panel (20), and
a part of the outer panel (20) that is located on the rear side of the door handle (50) and a part of the outer panel (20) that is located in the vicinity of a belt line (70) above the door handle (50) are joined to the frame (10).

14. The vehicle outer plate structure according to any one of Claims 1 to 6, wherein the frame (10) is a body (310) of a vehicle, and
the outer panel (20) is a design panel (311, 312) that is attached to the vehicle outer side of the body (310) and constitutes a design surface of the body (310).
